# EUROPÄISCHE PATENTSCHRIFT

(11) **EP 3 781 312 B1**
(45) Veröffentlichungstag und Bekanntmachung des Hinweises auf die Patenterteilung: **26.01.2022**
(21) Anmeldenummer: 19719242.0
(22) Anmeldetag: 18.04.2019
(51) Int. Cl.: B01L 3/00, G01N 35/00

(54) **VORRICHTUNG ZUM ANKOPPELN EINER KARTUSCHE FÜR EIN CHIPLABOR-ANALYSEGERÄT, CHIPLABOR-ANALYSEGERÄT UND VERFAHREN ZUM ANKOPPELN EINER KARTUSCHE FÜR EIN CHIPLABOR-ANALYSEGERÄT**
DEVICE FOR COUPLING A CARTRIDGE FOR A LAB-ON-A-CHIP ANALYSIS DEVICE, LAB-ON-A-CHIP ANALYSIS DEVICE AND METHOD FOR COUPLING A CARTRIDGE FOR A LAB-ON-A-CHIP ANALYSIS DEVICE
DISPOSITIF DE COUPLAGE D'UNE CARTOUCHE POUR UN ANALYSEUR DE LABORATOIRE DE PUCES, ANALYSEUR DE LABORATOIRE DE PUCES ET PROCÉDÉ DE COUPLAGE D'UNE CARTOUCHE POUR UN ANALYSEUR DE LABORATOIRE DE PUCES

(30) Priorität: 20.04.2018 DE 102018206066
(43) Veröffentlichungstag der Anmeldung: 24.02.2021
(73) Patentinhaber: Robert Bosch GmbH, 70442 Stuttgart (DE)
(72) Erfinder: RUPP, Jochen, 70569 Stuttgart (DE); CZURRATIS, Daniel, 70825 Korntal-Muenchingen (DE); SEIDL, Karsten, 45470 Mülheim an der Ruhr (DE); JELINEK, Thomas, 86836 Klosterlechfeld (DE)
(86) Internationale Anmeldenummer: PCT/EP2019/060063
(87) Internationale Veröffentlichungsnummer: WO 2019/202068

(56) Entgegenhaltungen:
- US-A1- 2004 222 091
- US-A1- 2013 137 591
- US-A1- 2017 113 221
- US-A1- 2018 015 474

## Beschreibung

### Stand der Technik

Die Erfindung geht von einer Vorrichtung oder einem Verfahren nach Gattung der unabhängigen Ansprüche aus.

In-vitro Diagnostik (IVD) ist ein Feld von Medizinprodukten, die aus humanen Proben spezifische Größen wie eine Konzentration eines Moleküls, ein Vorhandensein einer bestimmten DNA Sequenz oder eine Zusammensetzung von Blut messen, um eine Diagnose und Behandlungsentscheidung zuzulassen. Dies kann in einer Verkettung von mehreren Laborschritten erfolgen, wobei die Probe so aufbereitet werden kann, dass die Zielgröße störungsfrei messbar ist. Dabei können verschiedene Labormethoden mit einem jeweils für die Methode geeigneten Gerät angewandt werden. In Analysegeräten zur patientennahen Labordiagnostik, sogenannten point-of-care Geräten, können solche in-vitro Diagnostik Tests in einem Gerät abgebildet werden, um die Anzahl manueller Schritte vom Benutzer zu reduzieren. Dabei kann die Probe, auch Sample genannt, in eine Einwegkartusche eingegeben werden, die die für die biochemischen Reaktionen verwendeten Flüssig- und Festreagenzien enthalten kann. Flüssigreagenzien können dabei auf der Kartusche sicher verschlossen und stabil vorgelagert sein. Nach der Eingabe der Kartusche in das Analysegerät kann der Diagnosetest vollautomatisch abgearbeitet werden. Um die in der Kartusche enthaltenen Reagenzien in das mikrofluidische System - oft als Lab-on-Chip bezeichnet - freizugeben, können die in WO 2017108387 beschriebenen mechanische Stempel verwendet werden, die Siegelfolien mechanisch durchstoßen und die Flüssigkeiten freigeben. Die Flüssigkeiten in der Kartusche können durch die pneumatische Aktuierung von flexiblen Membranen in Ventilen und Kammern mittels Über- und Unterdruck gezielt im fluidischen Netzwerk des Lab-on-chip-Systems bewegt werden. Eine Vorrichtung zum Ankoppeln einer Kartusche wird in US 2018 015474 A1 beschrieben.

Offenbarung der Erfindung Vor diesem Hintergrund werden mit dem hier vorgestellten Ansatz eine Vorrichtung zum Ankoppeln einer Kartusche für ein Chiplabor-Analysegerät, ein Chiplabor-Analysegerät und ein Verfahren zum Ankoppeln einer Kartusche für ein Chiplabor-Analysegerät gemäß den Hauptansprüchen vorgestellt. Durch die in den abhängigen Ansprüchen aufgeführten Maßnahmen sind vorteilhafte Weiterbildungen und Verbesserungen der im unabhängigen Anspruch angegebenen Vorrichtung möglich.

Mit diesem Ansatz wird eine Vorrichtung für ein Chiplabor-Analysegerät vorgestellt, mit der eine Kartusche mit mikrofluidischen System mittels einer translatorischen Bewegung an eine pneumatische Schnittstelle angekoppelt werden kann, um einen pneumatischen Druck anzulegen, und mit der ein Stempel durch die translatorische Bewegung in eine Reagenzkammer der Kartusche eingeführt werden kann, um eine Reagenzfreisetzung zu bewirken. Dazu kann eine Kartusche in die Vorrichtung aufgenommen und pneumatisch kontaktiert werden. Vorteilhafterweise ermöglicht die Vorrichtung eine besonders kompakte Bauweise. Zudem ist die Vorrichtung durch eine einzige mechanische Aktuierungseinheit zum pneumatischen Kontaktieren und zum Einbringen des Stempels kostengünstig realisierbar. Von Vorteil ist auch die Möglichkeit der zeitlichen Abfolge beim Ankoppeln der pneumatischen Schnittstelle und dem Einbringen des Stempels in die Reagenzkammer, um beim Freisetzen der Reagenz ein Eindringen der Reagenz in ein Netzwerk des mikrofluidischen Systems zu verhindern.

Es wird eine Vorrichtung zum Ankoppeln einer Kartusche für ein Chiplabor-Analysegerät vorgestellt. Die Kartusche weist zumindest einen Pneumatikport und zumindest eine Reagenzkammer auf. Die Vorrichtung weist einen Aufnahmebereich und eine Klemmeinheit auf. Der Aufnahmebereich ist ausgeformt, um die Kartusche aufzunehmen. Die Klemmeinheit umfasst eine Pneumatikschnittstelle zum pneumatischen Kontaktieren des Pneumatikports und einen Stempel zum Einbringen in die Reagenzkammer. Die Klemmeinheit ist benachbart zu dem Aufnahmebereich angeordnet und dazu ausgebildet, eine erste translatorische Bewegung in Richtung des Aufnahmebereichs auszuführen, um die Pneumatikschnittstelle mit dem Pneumatikport zu kontaktieren. Zusätzlich ist die Klemmeinheit dazu ausgebildet, eine an die erste translatorische Bewegung anschließende zweite translatorische Bewegung in Richtung des Aufnahmebereichs auszuführen, um den Stempel in die Reagenzkammer einzuführen.

Bei der Kartusche kann es sich um eine mikrofluidische Lab-on-chip Kartusche handeln. Die Kartusche kann eine oder mehrere Reagenzkammer umfassen, die beispielsweise mit Flüssigreagenzien gefüllt und mit einer Siegelfolie versiegelt sein können. Die Kartusche kann ein Netzwerk an pneumatischen und fluidischen Kanälen umfassen, die mit einer flexiblen Membran voneinander getrennt sind. Die flexible Membran kann, beispielsweise ansprechend auf einen pneumatischen Druck, ausgelenkt werden und damit Flüssigkeiten im Netzwerk bewegen. Der zumindest eine Pneumatikport kann die Schnittstelle in der Kartusche zu der Vorrichtung oder zum Chiplabor-Analysegerät sein, um den Über- oder Unterdruck an die Kartusche zu führen und auf der Ober- und Unterseite der Kartusche angeordnet sein.

Die Vorrichtung kann beispielsweise Teil des Chiplabor-Analysegeräts sein.

Die Vorrichtung umfasst eine Klemmeinheit, die beispielsweise unter dem Aufnahmebereich angeordnet ist.

Die Klemmeinheit kann aus einem Metall, beispielsweise aus Aluminium oder aus Edelstahl, oder aus einem oder mehreren Kunststoffen ausgeformt und beispielsweise mittels Fräsen, Druckguss oder 3D-Druck hergestellt sein. Gemäß einer Ausführungsform kann das Einführen des Stempels in die Reagenzkammer erst mit der zweiten translatorischen Bewegung begonnen werden, sodass der Stempel während der ersten translatorischen Bewegung noch nicht in die Reagenzkammer eingeführt wird. Gemäß einer alternativen Ausführungsform kann der Stempel bereits durch die erste translatorische Bewegung teilweise in die Reagenzkammer eingeführt werden. In diesem Fall kann der Stempel durch die zweite translatorische Bewegung weiter in die Reagenzkammer eingeführt werden. Durch die erste und zweite translatorische Bewegung kann zum einen eine Anpressbewegung der Pneumatikschnittstelle an den Pneumatikport und zum anderen eine Einführbewegung des Stempels in die Reagenzkammer bewirkt werden. Je nach Ausführungsform können sich die Anpressbewegung und die Einführbewegung ein Stück weit überlappen. Also die Anpressbewegung geht minimal weiter (volle Kraft Einwirkung), während der oder die Stempel durch die Einführbewegung komplett einfahren. Dies kann beispielsweise der Fall sein, wenn ein elastisches Bauteil (Dichtlippe) verwendet wird. Die translatorische, also geradlinige, Bewegung der Klemmeinheit kann durch eine geeignete Antriebseinrichtung, beispielsweise durch einen Spindel- oder Schrittmotor bewirkt werden. Die erste und die zweite translatorische Bewegung können entlang derselben Bewegungsachse verlaufen. Die zweite translatorische Bewegung kann unmittelbar an die erste translatorische Bewegung anschließen, sodass es sich um eine durchgängige Gesamtbewegung handeln kann. Wenn die Vorrichtung in einem betriebsbereiten Chiplabor-Analysegerät angeordnet ist, können die erste und die zweite translatorische Bewegung vertikal oder schräg nach oben ausgeführt werden. Alternativ können die Bewegungen auch vertikal oder schräg nach unten oder je nach Anordnung der Kartusche in dem Chiplabor-Analysegerät auch horizontal oder ausgeführt werden. Gemäß einer Ausführungsform kann die Kartusche beispielsweise um 30 Grad geneigt sein, damit die Gravitationskraft ausgenutzt wird, sodass die translatorische Bewegung ebenfalls schräg verlaufen kann. Gemäß einer Ausführungsform können die translatorischen Bewegungen senkrecht zu einer Hauptebene der Kartusche ausgeführt werden, wenn die Kartusche in dem Chiplabor-Analysegerät angeordnet ist. Die Pneumatik-Schnittstelle kann als Schnittstelle zum pneumatischen Kontaktieren des Pneumatikport ausgeformt sein, um das Einleiten von Druckluft von der Pneumatikschnittstelle zu dem Pneumatikport zu ermöglichen. Der Stempel kann dazu ausgeformt sein, teilweise oder vollständig in die Reagenzkammer einzudringen, um ein Reagenzfreisetzen in der Kartusche zu bewirken. Dazu kann der Stempel beispielsweise die Siegelfolie zerstoßen, und zusätzlich oder alternativ die flexible Membran auszulenken.

Gemäß einer Ausführungsform kann die Klemmeinheit einen Träger aufweisen, an dem der Stempel angeordnet ist. Zusätzlich kann die Klemmeinheit einen dem Träger gegenüber beweglichen Kolben aufweisen, auf dem die Pneumatikschnittstelle angeordnet ist. Der Kolben kann also in Bezug auf den Träger beweglich gelagert sein. Zudem kann die Klemmeinheit eine Federeinrichtung mit zumindest einer Feder aufweisen. Die Feder kann mit dem Träger und dem Kolben gekoppelt sein, um ansprechend auf die erste translatorische Bewegung verformt zu werden. Der Träger kann beispielsweise als Platte ausgeformt sein. Der Stempel kann auf dem Träger angebracht sein, oder abschnittsweise in den Träger hineingeführt sein. Alternativ kann der Stempel Teil einer weiteren Klemmeinheit sein und somit auf einem entsprechendem Gegenträger oder einer entsprechenden Gegenplatte angeordnet sein. Der Kolben kann auch als Manifold bezeichnet werden. Der Kolben kann beispielsweise mittels zweier Passschrauben beweglich gelagert an den Träger montiert sein. Somit kann der Kolben als ein bewegliches Teil aufgefasst werden. Der Kolben kann eine Bewegung gegenüber dem Träger ausführen. Eine Richtung einer Relativbewegung zwischen dem Kolben und dem Träger kann dabei einer Richtung der ersten und zweiten translatorischen Bewegung entsprechen. Die Federeinrichtung kann beispielsweise mit den Passschrauben gekoppelt sein. Die Feder kann ansprechend auf die zweite translatorische Bewegung weiter verformt werden. Je nach Ausführungsform kann die Feder bei der ersten translatorischen Bewegung und der zweiten translatorischen Bewegung gestaucht oder gedehnt werden. Durch die Verformung der Feder kann die Feder eine Federkraft bereitstellen, durch die der Kolben in Richtung der Kartusche gedrückt wird. Die Feder kann beispielsweise eine Kompressionsfeder sein. Der Kolben kann beispielsweise so ausgeformt sein, dass die pneumatische Schnittstelle vor der ersten translatorischen Bewegung der Klemmeinheit einen Überstand in Bezug auf den Träger aufweist, was vorteilhaft im Hinblick auf das pneumatische Kontaktieren ist. Diese Ausführungsform ermöglicht ein besonders exaktes Kontaktieren der Pneumatikschnittstelle mit dem Pneumatikport. Zudem kann durch die Federkraft der Federeinrichtung eine gleichmäßige Anpresskraft des Kolbens und damit der Pneumatikschnittstelle an die Kartusche ermöglicht werden, was vorteilhafterweise die Justage-Toleranz reduziert.

Wenn die Klemmeinheit einen Kolben umfasst, kann der Kolben gemäß einer Ausführungsform zumindest ein mit der Pneumatikschnittstelle fluidisch gekoppeltes pneumatisches Umschaltventil aufweisen. Das Umschaltventil kann dazu ausgeformt sein, zwischen einem Über- und einem Unterdruck umzuschalten. Das Umschaltventil kann dazu ausgeformt sein, einen bereitgestellten pneumatischen Druck, beispielsweise in Form von Luft oder Gas, weiterzuleiten. Zudem kann das Umschaltventil dazu ausgebildet sein, beim Kontaktieren der Pneumatikschnittstelle mit dem Pneumatikport den pneumatischen Druck an den Pneumatikport und damit an die Kartusche freizugeben. Die Pneumatikschnittstelle oder der Pneumatikport können zudem eine elastische Dichtung aufweisen, um eine pneumatisch dichte Verbindung zu ermöglichen.

Ferner kann die Klemmeinheit gemäß einer Ausführungsform zumindest einen Positionierstift aufweisen, der dazu ausgeformt ist, die Kartusche zu positionieren. Der Positionierstift kann beispielsweise ausgeformt sein, um zumindest teilweise in die Kartusche einzugreifen, um die Kartusche zu positionieren. Dazu kann die Kartusche beispielsweise einen Führungsrahmen umfassen, der ein entsprechend ausgeformtes Loch zum Eingreifen des Positionierstifts aufweist. Die Klemmeinheit kann auch eine Mehrzahl an Positionierstiften aufweisen. Vorteilhafterweise kann die Kartusche, beispielsweise mittels der ersten translatorischen Bewegung, durch den Positionierstift exakt positioniert werden, was beispielsweise im Hinblick auf das Kontaktieren der Pneumatikschnittstelle mit dem Pneumatikport vorteilhaft ist, und zum Reduzieren der Justage-Toleranz beitragen kann. Die Positionierung in der Kartuschenebene kann beispielsweise im Sub-Millimeter-Bereich liegen, beispielsweise in einem Bereich von 0,3 Millimeter.

Zudem kann die Klemmeinheit gemäß einer Ausführungsform eine weitere Schnittstelle zum thermischen Kontaktieren der Kartusche aufweisen. Zusätzlich oder alternativ kann die Klemmeinheit eine Schnittstelle zum optischen Kontaktieren der Kartusche aufweisen. Das Kontaktieren der Kartusche mit der weiteren Schnittstelle kann mittels der ersten translatorischen Bewegung erfolgen. Ferner kann die Klemmeinheit eine Schnittstelle zum mechanischen Kontaktieren der Kartusche aufweisen. Wenn die Klemmeinheit einen Kolben umfasst, kann die weitere Schnittstelle auch auf dem Kolben angeordnet sein. In diesem Fall kann die weitere Schnittstelle zudem vor der ersten translatorischen Bewegung der Klemmeinheit einen Überstand in Bezug auf den Träger aufweisen, und durch die Feder der Federeinrichtung gefedert mit der Kartusche kontaktiert werden. Zum thermischen Kontaktieren kann die Klemmeinheit beispielsweise und/oder die weitere Klemmeinheit eine oder mehrere Heizzonen aufweisen. Zusätzlich oder alternativ kann die Klemmeinheit und/oder die weitere Klemmeinheit eine oder mehrere Kühlzonen aufweisen. Somit können die zum Temperieren geeigneten Zonen auf dem Träger der Klemmeinheit und zusätzlich oder alternativ auf einem Gegenträger oder einer Gegenplatte der weiteren Klemmeinheit angeordnet sein. Zum optischen Kontaktieren kann die Klemmeinheit beispielsweise eine Optikeinheit aufweisen. Die Optikeinheit kann beispielsweise einen Kamerachip mit optischen Filterelementen umfassen, oder Photodetektoren, oder ein oder mehrere Objektive, oder LEDs mit optischen Farbfiltern für die Fluoreszenzanregung und optische Detektion, oder eine Kombination der genannten Elemente. Gemäß einer Ausführungsform umfasst die Optikeinheit einen Lichtleithohlzylinder oder Lichtleithohlkegel, die zum Abschirmen des Umgebungslichts an die Kartusche gepresst werden. Die Klemmeinheit kann zum mechanischen Kontaktieren beispielsweise eine Ultraschall-betriebene Sonotrode aufweisen, um mittels Bewegung einer Membran der Kartusche in einem Reagenzvolumen Kavitation zum Zellaufschluss, auch Zelll-Lyse genannt, zu bewirken. Gemäß dieser Ausführungsform kann die Vorrichtung vorteilhafterweise zum Kontaktieren der Kartusche mit weiteren Schnittstellen verwendet werden, was vorteilhafterweise ein kompakte Bauweise ermöglicht.

Die Vorrichtung kann gemäß einer Ausführungsform zudem eine Antriebseinrichtung umfassen, die ausgebildet ist, um die erste und die zweite translatorische Bewegung der Klemmeinheit zu bewirken. Die Antriebseinrichtung kann beispielsweise ausgebildet sein, um mittels der zweiten translatorischen Bewegung eine Anpresskraft zur Reagenzfreisetzung im Bereich bis zu 150 Newton pro Reagenzkammer zu bewirken. Die Antriebseinrichtung kann optional ausgebildet sein, um zusätzlich eine weitere translatorische Bewegung zu bewirken. Die Antriebseinrichtung kann beispielsweise einen Spindelmotor oder einen Steppermotor umfassen. Vorteilhafterweise können somit mittels einer mechanischen Aktuierungseinheit verschiedene mechanische Vorgänge wie das Andocken der Pneumatikschnittstelle und das Einbringen des Stempels bewirkt werden, was eine kompakte Bauweise und eine kostengünstige Ausführung ermöglicht.

Auch kann die Vorrichtung gemäß einer Ausführungsform eine weitere Klemmeinheit aufweisen, die benachbart zu dem Aufnahmebereich angeordnet ist. Zusätzlich kann die weitere Klemmeinheit der Klemmeinheit gegenüberliegend angeordnet sein. Die Klemmeinheit und die weitere Klemmeinheit können in diesem Fall ausgeformt sein, um die im Aufnahmebereich angeordnete Kartusche zum Kontaktieren des Pneumatikports und zum Einbringen des Stempels zwischen der Klemmeinheit und der weiteren Klemmeinheit einzuklemmen. Die weitere Klemmeinheit kann entsprechend einer vorstehend genannten Ausführungsform der Klemmeinheit ausgeführt sein. Alternativ kann die Klemmeinheit auch fest montiert sein, beispielsweise an einem Gehäuse des Chiplabor-Analysegeräts. In diesem Fall kann die Klemmeinheit mittels der ersten und zweiten translatorischen Bewegung in Richtung der weiteren Klemmeinheit bewegt werden. Vorteilhafterweise befördert diese Ausführungsform eine exakte Positionierung und somit eine gleichmäßige Anpresskraft an die Kartusche, was besonders im Hinblick auf die Justagetoleranz eine kompakte Bauweise ermöglicht. Zusätzlich oder alternativ kann die weitere Klemmeinheit die weitere Schnittstelle aufweisen, beispielsweise die weitere Schnittstelle zum optischen Kontaktieren der Kartusche. Dies ist von Vorteil, um für die weitere Schnittstelle eine Positioniergenauigkeit im Mikrometerbereich erreichen zu können.

Wenn die Vorrichtung die weitere Klemmeinheit umfasst, kann die weitere Klemmeinheit gemäß einem Ausführungsbeispiel eine weitere Pneumatikschnittstelle zum pneumatischen Kontaktieren eines weiteren Pneumatikports der Kartusche aufweisen. Die weitere Klemmeinheit kann beispielsweise fest montiert sein. Der weitere Pneumatikport kann zudem ein Umschaltventil, wie es vorstehend beschrieben ist, aufweisen. Diese Ausführungsform ist von Vorteil, wenn die Kartusche beispielsweise zwei oder mehrere Pneumatikports aufweist, die an verschiedenen Seiten der Kartusche angeordnet sind. In diesem Fall können der Pneumatikport, der weitere Pneumatikport sowie mehrere Pneumatikports vorteilhafterweise mit einer gleichmäßigen Anpresskraft kontaktiert werden.

Zusätzlich oder alternativ kann die weitere Klemmeinheit gemäß einer Ausführungsform ausgebildet sein, um eine weitere translatorische Bewegung in Richtung des Aufnahmebereichs auszuführen. Gemäß dieser Ausführungsform können die Klemmeinheiten ausgebildet sein, um mittels der translatorischen Bewegung den Abstand zwischen sich zu verringern, sie können sich durch mechanische Aktuierung aufeinander zu bewegen. In diesem Fall kann die Antriebseinrichtung ausgeformt sein, um die weitere translatorische Bewegung zu bewirken. Die Klemmeinheit und die weitere Klemmeinheit können ausgeformt sein, um die Kartusche zum Kontaktieren der Pneumatikschnittstelle und zum Einbringen des Stempels zwischen einander einzuklemmen. Wenn die Kartusche beispielsweise eine flexible Membran und mehrere mit Flüssigkeiten wie Flüssigreagenzien gefüllte Reagenzkammern aufweist, kann die Auslenkung der flexiblen Membran mittels pneumatischer Aktuierung und damit das Bewegen der Flüssigkeiten mittels des Kontaktierens der Pneumatikschnittstelle mit dem Pneumatikport der der weiteren Pneumatikschnittstelle mit dem weiteren Pneumatikports sequentiell erfolgen, was vorteilhafterweise weitere Einsatzmöglichkeiten der Vorrichtung beim Prozessieren der Flüssigkeiten ermöglicht. Dazu kann die weitere translatorische Bewegung der weiteren Klemmeinheit entgegengesetzt zu den translatorischen Bewegungen der Klemmeinheit ausgeführt werden.

Wie bereits ausgeführt, kann die Klemmeinheit ausgebildet sein, um die erste translatorische Bewegung auszuführen, um den Stempel teilweise in die Reagenzkammer einzuführen, und ausgebildet ist, um die zweite translatorische Bewegung auszuführen, um den Stempel tiefer in die Reagenzkammer einzuführen. Somit kann die gesamte translatorische Bewegung verkürzt werden, da das Einführen des Stempels in die Reagenzkammer bereits während des Anpressvorgangs der pneumatischen Schnittstelle an den Pneumatikport begonnen wird.

Es wird ferner ein Chiplabor-Analysegerät vorgestellt. Das Chiplabor-Analysegerät umfasst eine Ausführungsform der vorstehend genannten Vorrichtung, eine Druckeinrichtung zum Bereitstellen eines pneumatischen Drucks für die Pneumatikschnittstelle und ein Gehäuse mit einer in den Aufnahmebereich mündenden Kartuschenöffnung zum Einbringen der Kartusche.

Zudem wird ein Verfahren zum Ankoppeln einer Kartusche für ein Chiplabor-Analysegerät unter Verwendung einer Ausführungsform der vorstehend genannten Vorrichtung vorgestellt. Die Kartusche weist zumindest einen Pneumatikport und zumindest eine Reagenzkammer auf. Das Verfahren umfasst einen Schritt des ersten translatorischen Bewegens und einen Schritt des zweiten translatorischen Bewegens. Im Schritt des ersten translatorischen Bewegens wird die Klemmeinheit in Richtung des Aufnahmebereichs bewegt, um die Pneumatikschnittstelle mit dem Pneumatikport zu kontaktieren. Im Schritt des zweiten translatorischen Bewegens wird die Klemmeinheit in Richtung des Aufnahmebereichs bewegt, um den Stempel in die Reagenzkammer einzuführen, wobei das zweite translatorische Bewegen an das erste translatorische Bewegen anschließt. Mit dem Schritt des ersten translatorischen Bewegens kann das Einleiten von Druckluft von der Pneumatikschnittstelle zu dem Pneumatikport ermöglicht werden. Wenn die Kartusche ein mikrofluidisches System mit mehreren Reagenzkammern und einer flexiblen Membran umfasst, kann durch das Einleiten von Druckluft die flexible Membran ausgelenkt werden, um in den Reagenzkammern enthaltene Flüssigkeiten zu bewegen. Mit dem Schritt des zweiten translatorischen Bewegens kann der Stempel teilweise oder vollständig in die Reagenzkammer eingeführt werden, um Reagenzien freizusetzen.

Ausführungsbeispiele des hier vorgestellten Ansatzes sind in den Zeichnungen dargestellt und in der nachfolgenden Beschreibung näher erläutert. Es zeigt:
Fig. 1 eine schematische Darstellung eines Chiplabor-Analysegeräts mit einer Vorrichtung zum Ankoppeln einer Kartusche gemäß einem Ausführungsbeispiel;
Fig. 2 bis 5 je eine schematische Darstellung einer Kartusche für ein Chiplabor-Analysegerät gemäß einem Ausführungsbeispiel;
Fig. 6 bis 7 je eine schematische Darstellung einer Vorrichtung zum Ankoppeln einer Kartusche für ein Chiplabor-Analysegerät gemäß einem Ausführungsbeispiel;
Fig. 8 eine schematische Darstellung einer weiteren Klemmeinheit einer Vorrichtung zum Ankoppeln einer Kartusche für ein Chiplabor-Analysegerät gemäß einem Ausführungsbeispiel;
Fig. 9 eine schematische Darstellung einer Klemmeinheit einer Vorrichtung zum Ankoppeln einer Kartusche für ein Chiplabor-Analysegerät gemäß einem Ausführungsbeispiel;
Fig. 10 eine schematische Darstellung eines Teils einer Klemmeinheit einer Vorrichtung zum Ankoppeln einer Kartusche für ein Chiplabor-Analysegerät gemäß einem Ausführungsbeispiel; und
Fig. 11 ein Ablaufdiagramm eines Verfahrens zum Ankoppeln einer Kartusche für ein Chiplabor-Analysegerät gemäß einem Ausführungsbeispiel.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

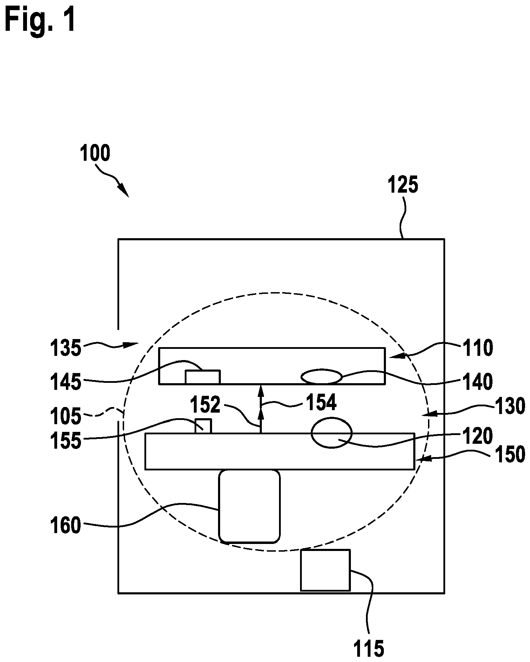

Fig. 1 zeigt eine schematische Darstellung eines Chiplabor-Analysegeräts 100 mit einer Vorrichtung 105 zum Ankoppeln einer Kartusche 110 gemäß einem Ausführungsbeispiel. Es ist auch die in der Vorrichtung 105 aufgenommene Kartusche 110 gezeigt. Das Chiplabor-Analysegerät 100 umfasst außer der Vorrichtung 105 eine Druckeinrichtung 115 zum Bereitstellen eines pneumatischen Drucks für eine Pneumatikschnittstelle 120 der Vorrichtung 105. Zudem weist das Chiplabor-Analysegerät 100 ein Gehäuse 125 mit einer in einen Aufnahmebereich 130 mündenden Kartuschenöffnung 135 zum Einbringen der Kartusche 110 in das Chiplabor-Analysegeräts 100 auf. Die Kartusche 110 weist einen Pneumatikport 140 und zumindest eine Reagenzkammer 145 auf.

Die Vorrichtung 105 umfasst eine Klemmeinheit 150 die benachbart zu dem Aufnahmebereich 130 angeordnet ist. Der Aufnahmebereich 130 ist ausgeformt, um die Kartusche 110 aufzunehmen. Die Klemmeinheit 150 umfasst die Pneumatikschnittstelle 120 zum pneumatischen Kontaktieren des Pneumatikports 140 und einen Stempel 155 zum Einbringen in die Reagenzkammer 145. Die Pneumatikschnittstelle 120 und der Stempel 155 sind auf einer dem Aufnahmebereich 130 zugewandten Seite der Klemmeinheit 150 angeordnet. Die Klemmeinheit 150 ist dazu ausgebildet, eine erste translatorische Bewegung 152 in Richtung des Aufnahmebereichs 130 auszuführen. Durch die erste translatorische Bewegung 152 wird die Pneumatikschnittstelle 120 mit dem Pneumatikport 140 kontaktiert. Gemäß einem Ausführungsbeispiel wird der Stempel 155 durch die erste translatorische Bewegung 152 bereits teilweise in die Reagenzkammer 145 eingeführt. Gemäß einem alternativen Ausführungsbeispiel wird der Stempel 155 durch die erste translatorische Bewegung 152 noch nicht in die Reagenzkammer 145 eingeführt. Zudem ist die Klemmeinheit 150 ausgebildet, um eine an die erste translatorische Bewegung 152 anschließende zweite translatorische Bewegung 154 in Richtung des Aufnahmebereichs 130 auszuführen, um den Stempel 155 in die Reagenzkammer 145 einzuführen, also mit dem Einführen des Stempels 155 in die Reagenzkammer 145 zu beginnen oder das Einführen des Stempels 155 fortzusetzen. Die erste und zweite translatorische Bewegung 152, 154 können als Anteile einer durchgängigen Bewegung aufgefasst werden. Diese durchgängige Bewegung kann mit konstanter oder variierender Geschwindigkeit ausgeführt werden. Gemäß einem Ausführungsbeispiel ist der Stempel 155 ausgeformt, um passgenau in die Reagenzkammer 145 eingeführt werden zu können.

Zudem weist die Vorrichtung 105 gemäß dem hier gezeigten Ausführungsbeispiel eine Antriebseinrichtung 160 auf. Die Antriebseinrichtung 160 ist ausgebildet, um die erste und die zweite translatorische Bewegung 152, 154 der Klemmeinheit 150 zu bewirken. Alternativ kann die Antriebseinrichtung 160 teil des Chiplabor-Analysegeräts 100 sein.

Die Vorrichtung 105 für das Chiplabor-Analysegerät 100, im Folgenden auch Lab-on-Chip Analysegerät 100 genannt, ist ausgeformt, um einen pneumatischen Druck, insbesondere einen Überdruck, an die Kartusche 110, im Folgenden auch Lab-on-Chip-Kartusche 110 genannt, zu leiten und zeitlich daran anschließend den Stempel 155 in die Kartusche 110 einzufahren oder weiter einzufahren. Die Bauweise der Vorrichtung 105 ist dabei kompakt. Mittels der Vorrichtung 105 wird die gemäß dem hier gezeigten Ausführungsbeispiel durch die Antriebseinrichtung 160 bewirkte erste translatorische Bewegung 152 ausgeführt, um die Pneumatikschnittstelle 120 der Klemmeinheit 150 an die Lab-on-Chip-Kartusche 110 anzudocken. Nach der erfolgten pneumatischen Kontaktierung wird die zweite translatorische Bewegung 154 ausgeführt, um den Stempel 155 in die Kartusche 110 einzubringen oder weitereinzubringen, um durch die mechanische Bewegung eine Siegelfolie, die die Reagenzkammer 145 versiegelt, zu zerstoßen und damit Reagenzien in ein fluidisches Netzwerk der Kartusche 110 freizusetzen. Dabei trennt den Stempel 155 und die Siegelfolie nochmals eine elastische Barrierefolie, die nicht zerstört wird. Alternativ wird nur durch ein Auslenken der Barrierefolie ein Verdrängen eines Volumens einer in der Reagenzkammer 145 enthaltenen Flüssigkeit bewirkt, was eine Bewegung im fluidischen Netzwerk der Kartusche 110 zur Folge hat. Die Kartusche 110 wird dazu zwischen zwei Ebenen und der in der Klemmeinheit 150 enthaltenen Pneumatikschnittstelle 120 und dem Stempel 155 einklemmt.

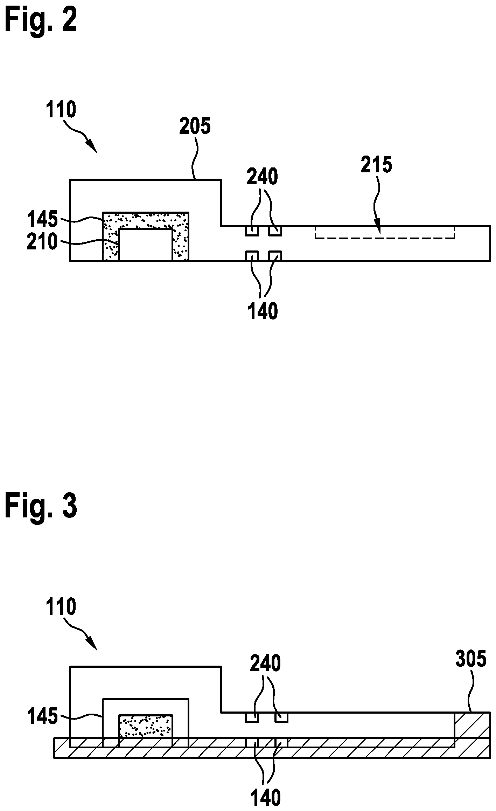

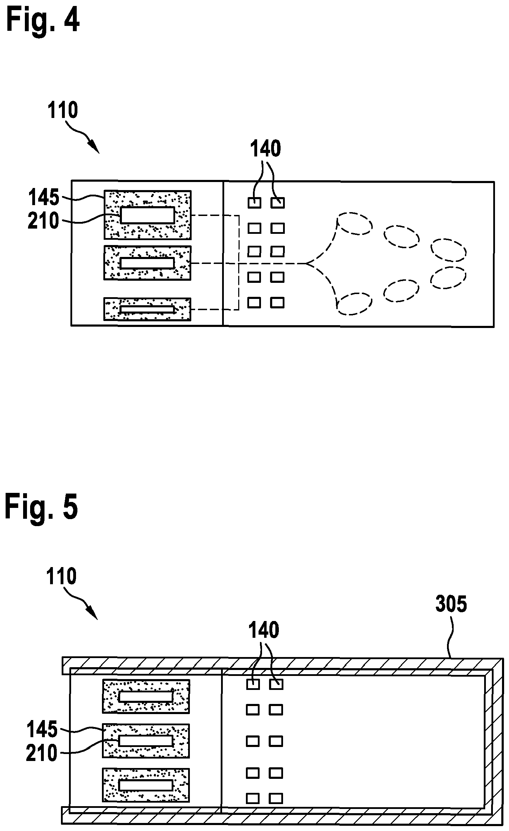

Fig. 2 zeigt eine schematische Darstellung einer Kartusche 110 für ein Chiplabor-Analysegerät gemäß einem Ausführungsbeispiel. Die Kartusche 110 weist ein Substrat als Trägerstruktur 205 auf. Es ist ein Querschnitt einer Seitenansicht der Kartusche 110 gezeigt, die der Kartusche aus der vorstehend beschriebenen Fig. 1 entspricht oder ähnelt. Die Kartusche 110 weist ein Substrat als Trägerstruktur 205 auf. Auf einer Seite der Trägerstruktur 205 ist zumindest eine Reagenzkammer 145 und zumindest ein Pneumatikport 140 angeordnet. Gemäß diesem Ausführungsbeispiel umfasst die Trägerstruktur 205 zumindest einen weiteren Pneumatikport 240, der auf einer dem zumindest einen Pneumatikport 140 gegenüberliegenden Seite der Trägerstruktur 205 angeordnet ist.. Beispielhaft weist die Kartusche 110 hier eine Mehrzahl von Pneumatikports 140, 240 auf, von denen in der gezeigten Schnittdarstellungen zwei Pneumatikports 140 auf der Unterseite der Kartusche 110 und zwei weitere Pneumatikports 240 auf der Oberseite der Kartusche 110 gezeigt sind. Die Reagenzkammer 145 umfasst optional einen abgetrennten Reagenzabschnitt 210, sodass zwei unterschiedliche Reagenzien in der Reagenzkammer 145 aufgenommen werden können, die beispielsweise durch eine Membran voneinander getrennt sein können. Die Kartusche 110 weist gemäß einem Ausführungsbeispiel mehrere entsprechend ausgeformte Reagenzkammern 145 auf, wie in Fig. 4 gezeigt. In dem hier gezeigten Ausführungsbeispiel ist die Reagenzkammer 145 beispielhaft mit einer oder mehreren Flüssigkeiten, wie einem Puffer, befüllt und mit einer Siegelfolie, beispielsweise einer Aluminiumverbundfolie versiegelt. Die Reagenzkammer 145 kann als separates Einlegeteil in der Kartusche 110 realisiert sein, und in der Trägerstruktur 205 der Kartusche 110 eingeklemmt oder anderweitig fixiert sein. Die Siegelfolie kann dabei in etwa auf Höhe der an die Reagenzkammer 145 angrenzenden Oberfläche der Trägerstruktur 205 angeordnet sein.

Zudem umfasst die Kartusche gemäß dem hier gezeigten Ausführungsbeispiel ein Netzwerk 215 an pneumatischen und fluidischen Kanälen, im Folgenden auch Fluidiknetzwerk 215 genannt. Die pneumatischen und fluidischen Kanäle sind mit einer flexiblen Membran voneinander getrennt. Mittels Über- und Unterdruck geleitet durch die pneumatischen Kanäle wird die flexible Membran an Orten von Kammern und Ventilen im Fluidiknetzwerk 215 ausgelenkt, um Flüssigkeiten im Fluidiknetzwerk 215 bewegt werden. Die Ventile ermöglichen auf gleiche Weise, einen fluidischen Kanal abzuklemmen und somit den Transport der Flüssigkeiten zu unterbinden. Insbesondere ist ein solches Ventil direkt an einem Auslass der Reagenzkammer 145 positioniert, um das Eindringen der Flüssigkeiten von der Reagenzkammer 145 in das fluidische Netzwerk zu unterbinden. Außerdem ist optional zwischen der Reagenzkammer 145 und dem entsprechendem Ventil jeweils eine fluidische Umlagerungskammer angeordnet, in der die Flüssigkeit zwischengespeichert werden kann. Die Pneumatikports 140, 240 bilden die Schnittstelle in der Kartusche 110 zum Chiplabor-Analysegerät, um den Über-oder Unterdruck in Form von Luft oder einem anderen Gas an die Kartusche 110 zu führen. Beispielhaft weist die Kartusche 110 hier zwei Pneumatikports 140 auf der Unterseite der Kartusche 110 und zwei weitere Pneumatikports 140 auf der Oberseite der Kartusche 110 auf. Die Kartusche 110 weist alternativ nur einseitig positionierte Pneumatikports 140, 240 auf. Jeder Pneumatikport 140, 240 führt gemäß diesem Ausführungsbeispiel zu mindestens einem fluidischen Ventil oder einer fluidischen Kammer auf der Kartusche 110.

Fig. 3 zeigt eine schematische Darstellung einer Kartusche 110 für ein Chiplabor-Analysegerät gemäß einem Ausführungsbeispiel. Die Kartusche 110 entspricht oder ähnelt der Kartusche aus Fig. 1, mit entsprechend ausgeformter Reagenzkammer 145 und den beispielhaften vier Pneumatikports 140, 240. Zusätzlich umfasst die Kartuschen 110 hier einen Führungsrahmen 305. Der Führungsrahmen ist zum Einführen der Kartusche 110 in das Chiplabor-Analysegerät ausgeformt. Der Führungsrahmen 305 ist aus einem Metall wie Aluminium oder Edelstahl oder aus Kunststoffen ausgeformt. Wenn die Kartusche 110 von einem Nutzer in das Chiplabor-Analysegerät eingegeben wird, weist die Kartusche 110 optional den hier gezeigten Führungsrahmen 305 auf. Die Kartusche 110 mit dem Führungsrahmen wird in das Chiplabor-Analysegerät eingezogen und positioniert, oder manuell im Chiplabor-Analysegerät positioniert. Die korrekte Verbindung des Führungsrahmens 305 mit anderen Elementen der Kartusche 110 wird optional mittels eines Sensors detektiert, bevor die Kartusche 110 mit dem Führungsrahmen 305 in dem Chiplabor-Analysegerät bewegt wird.

Fig. 4 zeigt eine schematische Darstellung einer Kartusche 110 für ein Chiplabor-Analysegerät gemäß einem Ausführungsbeispiel. Es ist eine Aufsicht auf die Kartusche 110 von unten gezeigt. Die hier gezeigte Kartusche 110 entspricht oder ähnelt der Kartusche aus Fig. 1. Beispielhaft umfasst die Kartusche 110 hier eine Einheit von drei nebeneinander liegenden Reagenzkammern 145, die wie hier gezeigt optional unterschiedliche Dimensionen aufweisen. Die Kartusche weist optional mehrere Einheiten von Reagenzkammern 145, beispielsweise zwei oder drei Einheiten von drei Reagenzkammern 145. Jede Reagenzkammer 145 weist optional zumindest einen abgetrennten Reagenzabschnitt 210 auf, sodass in jeder der Reagenzkammer 145 je nach Ausführung eine, zwei oder bei mehreren Reagenzabschnitten 210 pro Reagenzkammer 145 auch drei oder mehr unterschiedliche Reagenzien vorgelagert sein können. Zudem weist die Kartusche 110 beispielhaft 10 Pneumatikports 140 auf, die gleichmäßig beabstandet angeordnet sind. Dabei sind die Pneumatikports 140 beispielhaft in zwei Reihen angeordnet. Das Fluidiknetzwerk 215 ist fluidisch mit den Reagenzkammern 145 verbunden.

Fig. 5 zeigt eine schematische Darstellung einer Kartusche 110 für ein Chiplabor-Analysegerät gemäß einem Ausführungsbeispiel. Die Kartusche entspricht oder ähnelt der Kartusche aus Fig. 4, zusätzlich umfasst sie in dem hier gezeigten Ausführungsbeispiel den Führungsrahmen 305. Es ist wie in Fig. 4 eine Aufsicht auf die Kartusche 110 gezeigt.

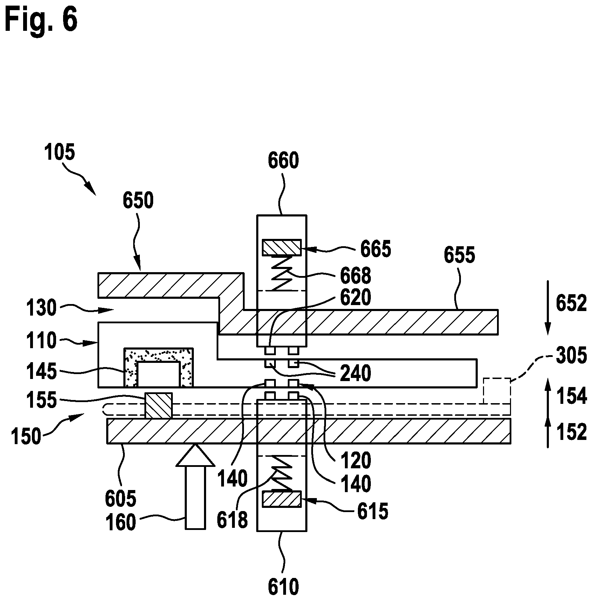

Fig. 6 zeigt eine schematische Darstellung einer Vorrichtung 105 zum Ankoppeln einer Kartusche 110 für ein Chiplabor-Analysegerät gemäß einem Ausführungsbeispiel. Es ist ein Querschnitt einer Seitenansicht der Vorrichtung 105 gezeigt, in der die Kartusche 110 angeordnet ist. Die Kartusche 110 entspricht oder ähnelt der Kartusche aus Fig. 3, mit entsprechend ausgeformter Reagenzkammer 145 und den beispielhaft in der Schnittdarstellung zu erkennenden zwei Pneumatikports 140 und weiteren Pneumatikports 240, und dem Führungsrahmen 305. Die Vorrichtung 105 weist den Aufnahmebereich 130 und die Klemmeinheit 150 auf, sowie die Antriebseinrichtung 160.

Gemäß dem hier gezeigten Ausführungsbeispiel weist die Klemmeinheit 150 einen Träger 605 auf, an dem der Stempel 155 angeordnet ist. Zusätzlich weist die Klemmeinheit 150 einen dem Träger 605 gegenüber beweglichen Kolben 610 auf, auf dem die Pneumatikschnittstelle 120 angeordnet ist. Die Klemmeinheit 150 weist zusätzlich eine Federeinrichtung 615 mit zumindest einer Feder 618 auf, wobei die Feder 618 mit dem Träger 605 und dem Kolben 610 gekoppelt ist, um ansprechend auf die erste translatorische Bewegung 152 verformt wird. Beispielhaft sind auf dem Kolben hier zwei Pneumatikschnittstellen 120 angeordnet, zum pneumatischen Kontaktieren der beiden Pneumatikports 140.

Zudem weist die Vorrichtung 105 optional eine weitere Klemmeinheit 650 auf. Die weitere Klemmeinheit 650 ist gemäß dem hier gezeigten Ausführungsbeispiel benachbart zu dem Aufnahmebereich 130 angeordnet. Zusätzlich ist die weitere Klemmeinheit 650 der Klemmeinheit 150 gegenüberliegend angeordnet. Die Klemmeinheit 150 ist hier als untere Klemmeinheit 150 gezeigt, und die weitere Klemmeinheit 650 ist als obere Klemmeinheit 650 gezeigt. Alternativ kann die Klemmeinheit 150 auch oben angeordnet sein und die weitere Klemmeinheit 650 unten, oder die Klemmeinheit 150 und die weitere Klemmeinheit 650 sind je nach Ausformung des Aufnahmebereichs 130 an gegenüberliegenden Seiten positioniert.

Optional weist die weitere Klemmeinheit 650 wie hier gezeigt eine weitere Pneumatikschnittstelle 620 zum pneumatischen Kontaktieren eines weiteren Pneumatikports 240 der Kartusche 110 auf. Beispielhaft sind hier zwei weitere Pneumatikschnittstellen 620 zum Kontaktieren der zwei weiteren Pneumatikports 240 gezeigt. In dem hier gezeigten Ausführungsbeispiel weist die weitere Klemmeinheit 650 zudem einen weiteren Träger 655, einen weiteren Kolben 660, eine weitere Federeinrichtung 665 und eine weitere Feder 668 auf, die entsprechend dem Träger 605, dem Kolben 610, der Federeinrichtung 615 und der Feder 618 der Klemmeinheit ausgeformt sind. Entsprechend ist die weitere Pneumatikschnittstelle 620 auf dem weiteren Kolben 660 angeordnet.

Die Kartusche 110 wird gemäß dem hier gezeigten Ausführungsbeispiel zum Kontaktieren der Pneumatikports 140 und der weiteren Pneumatikports 240 und zum Einbringen des Stempels 155 in die Reagenzkammer 145 zur Freisetzung von in der Reagenzkammer 145 befindlichen Reagenzien mittels des Stempels 155 zwischen der Klemmeinheit 150, im Folgenden auch untere Klemmeinheit 150 genannt, und der weiteren Klemmeinheit 650, im Folgenden auch obere Klemmeinheit 650 genannt, eingeklemmt. An der unteren Klemmeinheit 150 ist der Reagenzkammer 145 entsprechend der Stempel 155 auf dem Träger 605 der Klemmeinheit 150 montiert.

Die obere Klemmeinheit 650 ist gemäß einem Ausführungsbeispiel fest im Analysegerät montiert und bildet die sogenannte Null-Ebene, auch Zero-Plate genannt. Die untere Klemmeinheit 150 wird durch einen Motor der Antriebseinrichtung 160 betrieben und planparallel zur oberen Klemmeinheit 650 in Richtung der oberen Klemmeinheit 650 bewegt, um die erste und die zweite translatorische Bewegung 152, 154 auszuführen. In diesem Fall kann die obere Klemmeinheit 650 starr mit dem Chiplabor-Analysegerät verbunden sein. Alternativ ist die obere Einheit als Klemmeinheit 150 ausgeführt und die untere Einheit ist als weitere Klemmeinheit 650 ausgeführt, in diesem Fall kann die obere Einheit bewegt werden und die untere Einheit kann starr mit dem Chiplabor-Analysegerät verbunden sein. Alternativ ist die weitere Klemmeinheit 650 ausgebildet, um eine weitere translatorische Bewegung 652 in Richtung des Aufnahmebereichs 130 auszuführen. Die Klemmeinheit 150 und die weitere Klemmeinheit 650 sind in diesem Fall durch die gleiche Antriebseinrichtung 160 angetrieben und ausgebildet, sich auf einander zu zu bewegen, und die Antriebseinrichtung 160 ist ausgebildet, um auch die weitere translatorische Bewegung 652 zu bewirken. Alternativ sind zwei separate Antriebseinrichtungen 160 zum Bewegen der beiden Klemmeinheit 150, 650 vorgesehen.

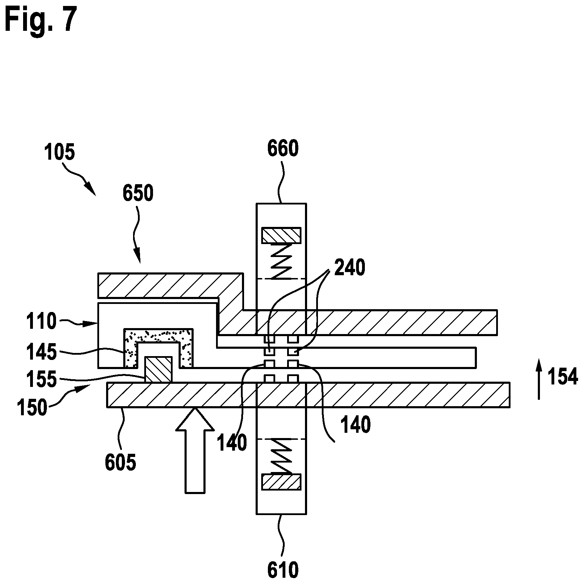

Im Folgenden ist beispielhaft eine Verwendung der Vorrichtung 105 gemäß dem hier gezeigten Ausführungsbeispiel beschrieben: Die Kolben 610, 660, im Folgenden auch Manifolds 610, 660 genannt, sind an den Klemmeinheiten 150, 650 montiert. Die Kolben 610, 660 sind mittels der Kompressionsfedern 618, 668 der Federeinrichtungen 615, 665 gefedert. Die Pneumatikschnittstellen 120, 620 weisen gegenüber den Trägern 605, 655 einen Überstand auf. Die Federeinrichtungen 615, 665 weisen optional je Kolben zwei Federn 618, 668 auf. Die Kolben 610, 660 sind etwa mittels zwei Passschrauben an die Träger 605, 655 montiert und mittels der in den Schrauben integrierten Kompressionsfedern 618, 668 überfedert gegen die Kartusche 110 angepresst. Auf diese Weise wird eine optimal gleichmäßige Anpresskraft des Kolbens 610, 660 an die Kartusche 110 ermöglicht und Justagetoleranzen des Kolbens 610, 660 zur Kartusche 110 werden ausgeglichen. Die Manifolds 610, 660 sind ausgeformt, um den Über- oder Unterdruck an die Pneumatikports 140, 240 der Kartusche 110 zu führen. Die Manifolds 610, 660 enthalten optional für jeden Pneumatikport 140, 240 ein Ventil, das zwischen Unter- und Überdruck umschalten kann. Der Über- und Unterdruck wird von jeweils einer im Chiplabor-Analysegerät enthaltenden Pumpe der Druckeinrichtung des Chiplabor-Analysegeräts bereitgestellt. Angetrieben durch den Motor der Antriebseinrichtung 160 wird die erste translatorische Bewegung 152 ausgeführt und die Kartusche 110 wird aus dem Führungsrahmen 305 in Richtung der oberen Klemmeinheit 650 herausgehoben. Die Schnittstellen zur Kartusche 110, die Pneumatikschnittstellen 120, 620, und damit die Manifolds 610, 660 und der Stempel 155 berühren die Kartusche 110. Ein optionaler Sensor, beispielsweise eine Lichtschranke oder ein Encoder, detektiert den Moment sobald die Manifolds 610, 660 an die Kartusche 110 andocken, wodurch der Überdruck an die Pneumatikports 140, 240 weitergegeben wird, die die Reagenzkammer 145 vom fluidischen System abklemmen. Zwischen dem Manifold 610, 660 und den Pneumatikports 140, 240 der Kartusche 110 ist optional eine elastische Dichtung angebracht. Diese kann an den Manifolds 610, 660 oder an der Kartusche 110 angebracht sein, um die Pneumtikschnittstellen 120, 620 pneumatisch dicht mit dem Pneumatikports 140, 240 zu verbinden. Um eine schnelle Weiterleitung des Überdrucks an die Kartusche 110 während des Anpressvorgangs zu erreichen und nicht auf den Aufbau des Drucks in der Pumpe zu warten, weist die Druckeinrichtung des Chiplabor-Analysegeräts optional einen Druckbehälter auf, der mittels eines Umschaltventil den Überdruck an die Kartusche 110 freigibt. Die Kolben 610, 660 können entsprechend ausgeformte Umschaltventile für die einzelnen Pneumatikports 140, 240 aufweisen, die auch vor dem Anpressvorgang bereits auf den Überdruckpfad geschaltet sein können. Mittels der zweiten translatorischen Bewegung 154 wird der Anpressvorgang nach der pneumatischen Kontaktierung fortgesetzt. Dabei taucht der Stempel 155 vollständig in die Reagenzkammer 145 ein, wie in der folgenden Fig. 7 gezeigt.

Somit wird gemäß einem Ausführungsbeispiel während der ersten translatorischen Bewegung 152 der Träger 605 zusammen mit dem Stempel 155 und der Pneumatikschnittstelle 120 in Richtung der Kartusche 110 bewegt. Dadurch wird die Pneumatikschnittstelle 120 gegen die Pneumatikports 140 gedrückt. Aufgrund der beweglichen und gefederten Lagerung der Pneumatikschnittstelle 120 gegenüber dem Träger 605 kann sich die Bewegung der Pneumatikschnittstelle 120 in Richtung der Kartusche 110 verlangsamen oder zum Stillstand kommen, wenn die Pneumatikschnittstelle 120 gegen die Pneumatikports 140 drückt. Die erste translatorische Bewegung 152 des Trägers 605 kann noch weitergeführt werden, um den Druck der Pneumatikschnittstelle 120 gegen die Pneumatikports 140 weiter zu erhöhen. Optional wird der Stempel 155 bereits während der ersten translatorischen Bewegung 152 teilweise in die Reagenzkammer 145 eingeführt. Während der zweiten translatorischen Bewegung 154 wird der Träger 605 zusammen mit dem Stempel 155 weiter in Richtung der Kartusche 110 bewegt, beispielsweise bis der Stempel 155 eine maximale Eintauchtiefe in der Reagenzkammer 145 erreicht hat. Die Pneumatikschnittstelle 120 kann dabei ebenfalls, gegebenenfalls verlangsamt, weiter in Richtung der Kartusche 110 bewegt werden oder sich gegenüber der Kartusche 110 im Stillstand befinden.

Fig. 7 zeigt eine schematische Darstellung einer Vorrichtung 105 zum Ankoppeln einer Kartusche 110 für ein Chiplabor-Analysegerät gemäß einem Ausführungsbeispiel. Es ist eine weitere Situation der anhand von Fig. 6 beschriebenen Vorrichtung 105 gezeigt. Hier ist als Situation das Ausführen der zweiten translatorischen Bewegung 154 gezeigt. Die mittels Kompressionsfedern 618, 668 ausgelagerten Manifolds 610, 660 werden dabei einen kleineren Weg als der restliche Verfahrweg des Stempels 155 weiter an die Kartusche 110 angepresst. Der Stempel 155 reißt dabei eine Siegelfolie der Reagenzkammer 145 auf, wodurch die in der Reagenzkammer 145 gespeicherte Flüssigkeit verdrängt wird und in eine Vorlagerungskammer fließt. Diese Vorlagerungskammer ist vom restlichen fluidischen Netzwerk durch die zeitlich davor erfolgte pneumatische Aktuierung mittels der ersten translatorischen Bewegung aber getrennt, was ein Eindringen der Flüssigkeiten in das Netzwerk verhindert. Zwischen dem Stempel 155 und der Siegelfolie ist eine elastische Membran in der Kartusche 110 vorhanden, die nicht durch den Stempel 155 zerstört wird und das Ausdringen von Flüssigkeiten ins Chiplabor-Analysegerät verhindert. Die Flüssigkeiten können damit nur in entsprechende Umlagerungskammern gelangen. Zusätzlich oder alternativ ist es möglich, mittels des Stempels 155 nur eine fluidische Verbindung zwischen der Reagenzkammer 145 und dem Zielort, z.B. der Umlagerungskammer, zu öffnen. Alternativ ist es möglich, dass durch den Stempel 155 nur die elastische Barrierefolie ausgelenkt wird und keine explizite Siegelfolie zerstört wird, und damit die Flüssigkeit zwischen zwei Positionen der Reagenzkammer 145 und einem Zielort, z.B. der Umlagerungskammer, verschoben wird. Nach der erfolgten Kontaktierung der Pneumatikports 140, 240 und der Freisetzung der Reagenzien mittels des Stempels 155 wird der fluidische Ablauf auf der Kartusche 110 gestartet und die Reagenzien werden nach Öffnen der Ventile der Umlagerungskammern an die entsprechenden Reaktionsorte auf der Kartusche 110 transportiert. Die Kartusche 110 bleibt während der Prozessierung zwischen der Klemmeinheit 150 und der weiteren Klemmeinheit 650 eingeklemmt und wird erst nach Abschluss der Analyse-Detektion durch das Chiplabor-Analysegerät wieder von der Vorrichtung 105 freigegeben.

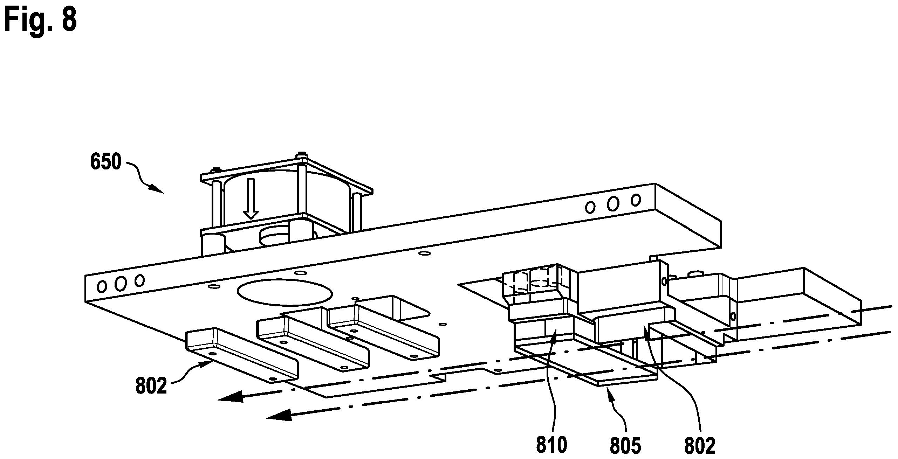

Fig. 8 zeigt eine schematische Darstellung einer weiteren Klemmeinheit 650 einer Vorrichtung zum Ankoppeln einer Kartusche für ein Chiplabor-Analysegerät gemäß einem Ausführungsbeispiel. Die weitere Klemmeinheit 650 ist in einer Seitenansicht aus einer Blickrichtung von unten gezeigt und entspricht oder ähnelt im Wesentlichen der anhand der vorstehenden Figuren 6 und 7 beschriebenen weiteren Klemmeinheit. Die hier gezeigte weitere Klemmeinheit 650 kann als obere Klemmeinheit der Vorrichtung fest im Chiplabor-Analysegerät montiert sein und auf diese Weise eine feste Bezugsebene 802, eine sogenannte Zero-Plate, ausformen. Die Bezugsebene 802 ist hier durch zwei Pfeile markiert.

Die weitere Klemmeinheit 650 weist gemäß einem Ausführungsbeispiel eine weitere Schnittstelle zum thermischen, optischen und/oder mechanischen Kontaktieren der Kartusche auf. Optional weist die weitere Klemmeinheit 650 zusätzlich oder alternativ die weitere Schnittstelle 805 zum thermischen, optischen und/oder mechanischen Kontaktieren der Kartusche auf, wie in dem hier gezeigten Ausführungsbeispiel. Die weitere Schnittstelle 805 ist hier zum thermischen Kontaktieren der Kartusche ausgebildet und beispielhaft als Heizzone mit einem Heizelement 810 ausgeführt. Die weitere Schnittstelle 805 ist optional gegenüber der Bezugsebene 802 beweglich und dazu insbesondere auf dem Kolben angeordnet, der mittels der Kompressionsfeder gefedert ist. In Bezug auf die Bezugsebene 802 sind die weitere Schnittstelle 805 mit dem Heizelement und der Kolben überfedert angeordnet.

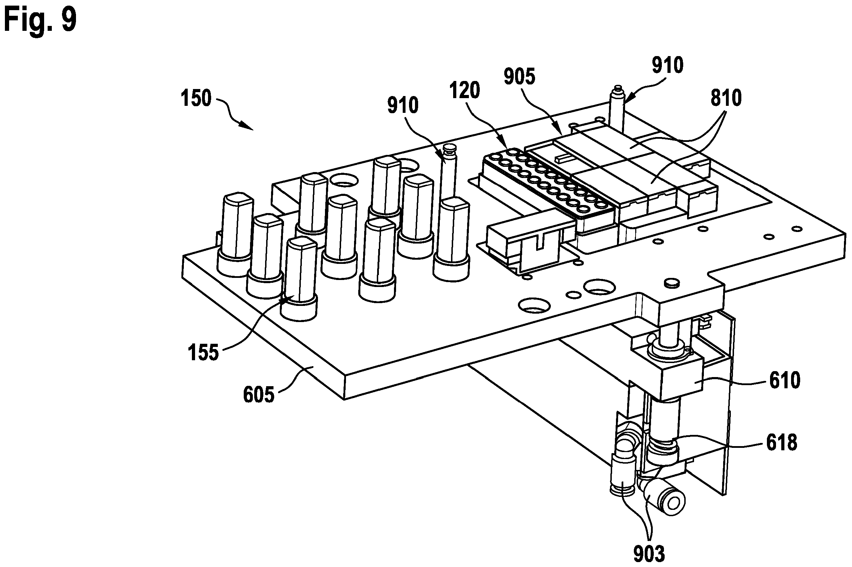

Fig. 9 zeigt eine schematische Darstellung einer Klemmeinheit 150 einer Vorrichtung zum Ankoppeln einer Kartusche für ein Chiplabor-Analysegerät gemäß einem Ausführungsbeispiel. Die Klemmeinheit 150 ist in einer Seitenansicht aus einer Blickrichtung von oben gezeigt und entspricht oder ähnelt im Wesentlichen der Klemmeinheit einer der vorstehend genannten Figuren. Die Klemmeinheit weist gemäß dem hier gezeigten Ausführungsbeispiel einen Träger 605 auf, auf dem der Stempel 155 angeordnet ist. Beispielhaft weist der Träger 605 hier neun längliche Stempel 155 auf, die gleichmäßig beabstandet angeordnet sind. Zudem weist die Klemmeinheit 150 den gegenüber dem Träger 605 beweglichen Kolben 610 mit der Pneumatikschnittstelle 120 auf. Der Kolben 610 ist mittels der Kompressionsfeder 618 gefedert. Der Kolben 610 weist gemäß dem hier gezeigten Ausführungsbeispiel zudem ein mit der Pneumatikschnittstelle 120 gekoppeltes pneumatisches Umschaltventil 905 auf. Beispielhaft sind hier zwei Umschaltventile 903 gezeigt.

Die Klemmeinheit 150 weist gemäß dem hier gezeigten Ausführungsbeispiel die weitere Schnittstelle 905 zum thermischen, optischen und/oder mechanischen Kontaktieren der Kartusche auf. Beispielhaft umfasst die Klemmeinheit 150 hier fünf weitere Schnittstellen 905, von denen zwei zum thermischen Kontaktieren je ein Heizelement 810 umfassen. Zusätzlich oder alternativ umfasst die weitere Schnittstelle 905 zum Ausformen einer oder mehrerer Kühlzonen zumindest ein Kühlelement, zum mechanischen Kontaktieren der Kartusche umfasst die weitere Schnittstelle 905 optional Ultraschall-betriebene Sonotrode, um mittels Bewegung einer Membran der Kartusche in einem Reagenzvolumen Kavitation zum Zellaufschluss, auch Zelll-Lyse genannt, zu bewirken. Zum optischen Kontaktieren weist die Klemmeinheit 150 eine Optikeinheit als weitere Schnittstelle auf, wobei die Optikeinheit insbesondere eines der folgenden optischen Elemente aufweist: ein Kamerachip mit optischen Filterelementen, ein Photodetektor, ein Objektiv, oder LEDs mit optischen Farbfiltern für die Fluoreszenzanregung und optische Detektion. Die weiteren Schnittstellen werden optional mittels der ersten translatorischen Bewegung an die Kartusche angedockt. Die weiteren Schnittstellen sind optional auf dem Kolben 610 angeordnet und dazu ausgebildet, überfedert an die Kartusche anzudocken. Die genannten Ausführungsformen der weiteren Schnittstelle 905 sind optional zusätzlich oder alternativ auf der weiteren Klemmeinheit ausgeformt. Insbesondere ist die weitere Schnittstelle 905 zum optischen Kontaktieren auf der weiteren Klemmeinheit ausgeformt, wenn die weitere Klemmeinheit gemäß einem Ausführungsbeispiel fest montiert ist, um eine Positioniergenauigkeit im Mikrometerbereich zu ermöglichen.

Gemäß dem hier gezeigten Ausführungsbeispiel weist die Klemmeinheit 150 zudem zumindest einen Positionierstift 910 auf. Der Positionierstift 910 ist dazu ausgeformt, die Kartusche zu positionieren. Die Klemmeinheit 150 weist hier beispielhaft zwei auf dem Träger 605 angeordnete Positionierstifte 910 auf. Der Positionierstift 910 ist optional dazu ausgeformt, in den Führungsrahmen der Kartusche oder in ein anderes Element der Kartusche einzugreifen, um die Kartusche zu positionieren und zusätzlich zu stabilisieren. Das Positionieren der Kartusche mittels des zumindest einen Positionierstifts 910 erfolgt mittels der ersten translatorischen Bewegung der Klemmeinheit 150.

Im Folgenden ist beispielhaft eine Verwendung der hier gezeigten Ausführungsform der Klemmeinheit 150 beschrieben: Im Moment des Heraushebens der Kartusche aus dem Führungsrahmens fahren während der ersten translatorischen Bewegung zwei Positionierstifte 910, auch Führungsstifte genannt, in zwei Führungslöcher der Kartusche ein, um die Kartusche damit lateral zu positionieren. Mittels der ersten translatorischen Bewegung ist damit auch eine laterale exakte Positionierung im Bereich von unter +/-0.3 Millimeter möglich. Die Kartusche weist in diesem Fall ein Rundloch und ein möglichst weit entferntes Langloch auf. Der Durchmesser der Positionierstifte 910 auf der Klemmeinheit 150 sowie die Dimensionen der Rund- bzw. Langlöcher bestimmen die Justagetoleranz der Kartusche in der Ebene. Mittels der ersten translatorischen Bewegung werden auch die weiteren Schnittstellen 905 mit Heizungs- oder Kühlzonen, der Optikeinheit einschließlich dem Kamerachip- und Objektiv und Fluoreszenzanregungs-LEDs sowie einer Sonotrode zur Zell-Lyse an die Kartusche angedockt. Die laterale Positionierung der Kartusche kann durch das Einfahren der Positionierstifte 910 als Justagepins ebenfalls durch die gleiche translatorische Bewegung unterstützt werden.

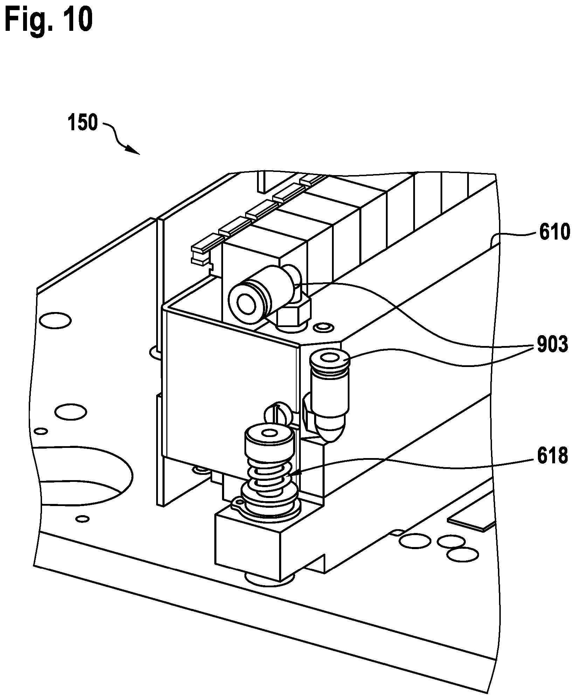

Fig. 10 zeigt eine schematische Darstellung eines Teils einer Klemmeinheit 150 einer Vorrichtung zum Ankoppeln einer Kartusche für ein Chiplabor-Analysegerät gemäß einem Ausführungsbeispiel. Die Klemmeinheit 150 und entspricht oder ähnelt der Klemmeinheit einer der vorstehend genannten Figuren. Als Teil der Klemmeinheit 150 ist ein Abschnitt des Kolbens 610 mit der Kompressionsfeder 618 und zwei Umschaltventilen 903 in einer Seitenansicht gezeigt. Der Kolben 610 ist optional mittels zwei Kompressionsfedern 618 wie der hier gezeigten Feder 618 gelagert, um die Pneumatikschnittstelle gefedert an die Kartusche anzukoppeln.

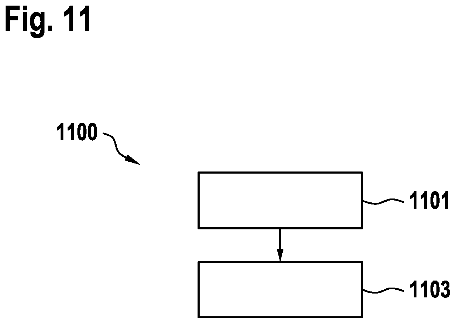

Fig. 11 zeigt ein Ablaufdiagramm eines Verfahrens 1100 zum Ankoppeln einer Kartusche für ein Chiplabor-Analysegerät gemäß einem Ausführungsbeispiel. Das Verfahren 1100 wird unter Verwendung einer Ausführungsform der Vorrichtung, wie sie anhand der vorstehenden Figuren beschrieben wurde, ausgeführt. Die Kartusche weist zumindest einen Pneumatikport und zumindest eine Reagenzkammer auf. Das Verfahren 1100 weist zumindest einen Schritt 1101 des ersten translatorischen Bewegens und einen Schritt 1103 des zweiten translatorischen Bewegens auf. Im Schritt 1101 wird das erste translatorische Bewegen der Klemmeinheit in Richtung des Aufnahmebereichs ausgeführt, um die Pneumatikschnittstelle mit dem Pneumatikport zu kontaktieren und optional den Stempel bereits teilweise in die Reagenzkammer einzuführen. Im Schritt 1103 wird das zweite translatorische Bewegen der Klemmeinheit in Richtung des Aufnahmebereichs ausgeführt, um den Stempel in die Reagenzkammer erstmalig oder weiter einzuführen, wobei das zweite translatorische Bewegen an das erste translatorische Bewegen anschließt. Im Schritt 1101 wird mittels des ersten translatorischen Bewegens optional eine weitere Schnittstelle mit der Kartusche kontaktiert. Zusätzlich oder alternativ wird die Kartusche optional mittels des zumindest einen Positionierstifts positioniert. Der Schritt 1103 wird ausgeführt, um mittels des Einführens des Stempels eine in der Reagenzkammer enthaltene Reagenz freizusetzen.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Vorrichtung (105) zum Ankoppeln einer Kartusche (110) für ein Chiplabor-Analysegerät (100), wobei die Kartusche (110) zumindest einen Pneumatikport (140) und zumindest eine Reagenzkammer (145) aufweist, und wobei die Vorrichtung (105) folgende Merkmale aufweist:
einen Aufnahmebereich (130), der ausgeformt ist, um die Kartusche (110) aufzunehmen;
eine Klemmeinheit (150) mit einer Pneumatikschnittstelle (120) zum pneumatischen Kontaktieren des Pneumatikports (140) und mit einem Stempel (155) zum Einbringen in die Reagenzkammer (145), wobei die Klemmeinheit (150) benachbart zu dem Aufnahmebereich (130) angeordnet ist, und wobei die Klemmeinheit (150) ausgebildet ist, um eine erste translatorische Bewegung (152) in Richtung des Aufnahmebereichs (130) auszuführen, um die Pneumatikschnittstelle (120) mit dem Pneumatikport (140) zu kontaktieren, und wobei die Klemmeinheit (150) ausgebildet ist, um eine an die erste translatorische Bewegung (152) anschließende zweite translatorische Bewegung (154) in Richtung des Aufnahmebereichs (130) auszuführen, um den Stempel (155) in die Reagenzkammer (145) einzuführen.

2. Vorrichtung (105) gemäß Anspruch 1, wobei die Klemmeinheit (150) einen Träger (605) aufweist, an dem der Stempel (155) angeordnet ist, und wobei die Klemmeinheit (150) einen dem Träger (605) gegenüber beweglichen Kolben (610) aufweist, auf dem die Pneumatikschnittstelle (120) angeordnet ist, und wobei die Klemmeinheit (150) eine Federeinrichtung (615) mit zumindest einer Feder (618) aufweist, wobei die Feder (618) mit dem Träger (605) und dem Kolben (610) gekoppelt ist, und ansprechend auf die erste translatorische Bewegung (152) verformt wird.

3. Vorrichtung (105) gemäß Anspruch 2, wobei der Kolben (610) zumindest ein mit der Pneumatikschnittstelle (120) fluidisch gekoppeltes pneumatisches Umschaltventil (903) aufweist.

4. Vorrichtung (105) gemäß einem der vorangegangenen Ansprüche, wobei die Klemmeinheit (150) zumindest einen Positionierstift (910) aufweist, der dazu ausgeformt ist, die Kartusche (110) zu positionieren.

5. Vorrichtung (105) gemäß einem der vorangegangenen Ansprüche, wobei die Klemmeinheit (150) eine weitere Schnittstelle (805; 905) zum thermischen, optischen und/oder mechanischen Kontaktieren der Kartusche (110) aufweist.

6. Vorrichtung (105) gemäß einem der vorangegangenen Ansprüche, mit einer Antriebseinrichtung (160), die ausgebildet ist, um die erste und die zweite translatorische Bewegung (152, 154) der Klemmeinheit (150) zu bewirken.

7. Vorrichtung (105) gemäß einem der vorangegangenen Ansprüche, mit einer weiteren Klemmeinheit (150), die benachbart zu dem Aufnahmebereich (130) der Klemmeinheit (150) gegenüberliegend angeordnet ist.

8. Vorrichtung (105) gemäß Anspruch 7, wobei die weitere Klemmeinheit (150) eine weitere Pneumatikschnittstelle (620) zum pneumatischen Kontaktieren eines weiteren Pneumatikport (240) der Kartusche (110) aufweist.

9. Vorrichtung (105) gemäß einem der Ansprüche 7 bis 8, wobei die weitere Klemmeinheit (650) ausgebildet ist, um eine weitere translatorische Bewegung (652) in Richtung des Aufnahmebereichs (130) auszuführen.

10. Vorrichtung (105) gemäß einem der vorangegangenen Ansprüche, wobei die Klemmeinheit (150) ausgebildet ist, um die erste translatorische Bewegung (152) auszuführen, um den Stempel (155) teilweise in die Reagenzkammer (145) einzuführen, und wobei die Klemmeinheit (150) ausgebildet ist, um die zweite translatorische Bewegung (154) auszuführen, um den Stempel (155) tiefer in die Reagenzkammer (145) einzuführen.

11. Chiplabor-Analysegerät (100) mit einer Vorrichtung (105) gemäß einem der Ansprüche 1 bis 10 und einer Druckeinrichtung (115) zum Bereitstellen eines pneumatischen Drucks für die Pneumatikschnittstelle (120) und einem Gehäuse (125) mit einer in den Aufnahmebereich (130) mündenden Kartuschenöffnung (135) zum Einbringen der Kartusche (110).

12. Verfahren (1100) zum Ankoppeln einer Kartusche (110) für ein Chiplabor-Analysegerät (100) unter Verwendung einer Vorrichtung (105) gemäß einem der Ansprüche 1 bis 10, wobei die Kartusche (110) zumindest einen Pneumatikport (140) und zumindest eine Reagenzkammer (145) aufweist, wobei das Verfahren (1100) zumindest folgende Schritte aufweist:
erstes translatorisches Bewegen (1101) der Klemmeinheit (150) in Richtung des Aufnahmebereichs (130), um die Pneumatikschnittstelle (120) mit dem Pneumatikport (140) zu kontaktieren;
zweites translatorisches Bewegen (1103) der Klemmeinheit (150) in Richtung des Aufnahmebereichs (130), um den Stempel (155) in die Reagenzkammer (145) einzuführen, wobei das zweite translatorische Bewegen (1103) an das erste translatorische Bewegen (1101) anschließt.

## Claims

1. Device (105) for coupling a cartridge (110) for a lab-on-a-chip analyzer (100), wherein the cartridge (110) has at least one pneumatic port (140) and at least one reagent chamber (145), and wherein the device (105) has the following features:
a receiving region (130), which is configured to receive the cartridge (110);
a clamping unit (150) having a pneumatic interface (120) for pneumatically contacting the pneumatic port (140), and having a punch (155) for introducing into the reagent chamber (145), wherein the clamping unit (150) is arranged adjacent to the receiving region (130), and wherein the clamping unit (150) is designed to execute a first translatory movement (152) in the direction of the receiving region (130) in order to bring the pneumatic interface (120) into contact with the pneumatic port (140), and wherein the clamping unit (150) is designed to execute a second translatory movement (154) in the direction of the receiving region (130), subsequent to the first translatory movement (152), in order to insert the punch (155) into the reagent chamber (145).

2. Device (105) according to Claim 1, wherein the clamping unit (150) has a support (605) on which the punch (155) is arranged, and wherein the clamping unit (150) has a piston (610) which is movable relative to the support (605) and on which the pneumatic interface (120) is arranged, and wherein the clamping unit (150) has a spring mechanism (615) with at least one spring (618), wherein the spring (618) is coupled to the support (605) and the piston (610) and is deformed in response to the first translatory movement (152).

3. Device (105) according to Claim 2, wherein the piston (610) has at least one pneumatic switching valve (903) fluidically coupled to the pneumatic interface (120).

4. Device (105) according to one of the preceding claims, wherein the clamping unit (150) has at least one positioning pin (910), which is configured to position the cartridge (110).

5. Device (105) according to one of the preceding claims, wherein the clamping unit (150) has a further interface (805; 905) for thermal, optical and/or mechanical contacting of the cartridge (110).

6. Device (105) according to one of the preceding claims, having a drive mechanism (160) which is designed to effect the first and second translatory movement (152, 154) of the clamping unit (150).

7. Device (105) according to one of the preceding claims, having a further clamping unit (150) which, adjacent to the receiving region (130), is arranged lying opposite the clamping unit (150).

8. Device (105) according to Claim 7, wherein the further clamping unit (150) has a further pneumatic interface (620) for pneumatically contacting a further pneumatic port (240) of the cartridge (110).

9. Device (105) according to either of Claims 7 and 8, wherein the further clamping unit (650) is designed to execute a further translatory movement (652) in the direction of the receiving region (130).

10. Device (105) according to one of the preceding claims, wherein the clamping unit (150) is designed to execute the first translatory movement (152) in order to insert the punch (155) partially into the reagent chamber (145), and wherein the clamping unit (150) is designed to execute the second translatory movement (154) in order to insert the punch (155) deeper into the reagent chamber (145).

11. Lab-on-a-chip analyzer (100) having a device (105) according to one of Claims 1 to 10 and having a pressure mechanism (115) for making available a pneumatic pressure for the pneumatic interface (120), and having a housing (125) with a cartridge opening (135) which leads into the receiving region (130) and through which the cartridge (110) is introduced.

12. Method (1100) for coupling a cartridge (110) for a lab-on-a-chip analyzer (100) using a device (105) according to one of Claims 1 to 10, wherein the cartridge (110) has at least one pneumatic port (140) and at least one reagent chamber (145), wherein the method (1100) has at least the following steps:
first translatory movement (1101) of the clamping unit (150) in the direction of the receiving region (130), in order to bring the pneumatic interface (120) into contact with the pneumatic port (140);
second translatory movement (1103) of the clamping unit (150) in the direction of the receiving region (130), in order to insert the punch (155) into the reagent chamber (145), wherein the second translatory movement (1103) is subsequent to the first translatory movement (1101).

## Revendications

1. Dispositif (105) d'accouplement d'une cartouche (110) destinée à un analyseur de laboratoire à puce (100), la cartouche (110) comportant au moins un orifice pneumatique (140) et au moins une chambre de réactif (145), et le dispositif (105) présentant les caractéristiques suivantes :
une zone de réception (130) conçue pour recevoir la cartouche (110) ;
une unité de serrage (150) comportant une interface pneumatique (120) destinée à venir en contact pneumatique avec l'orifice pneumatique (140) et un poinçon (155) destiné à pénétrer dans la chambre de réactif (145), l'unité de serrage (150) étant disposée de manière adjacente à la zone de réception (130), et l'unité de serrage (150) étant conçue pour effectuer un premier mouvement de translation (152) en direction de la zone de réception (130) afin d'amener l'interface pneumatique (120) en contact avec l'orifice pneumatique (140), et l'unité de serrage (150) étant conçue pour effectuer un deuxième mouvement de translation (154) à la suite du premier mouvement de translation (152) en direction de la zone de réception (130) afin d'introduire le poinçon (155) dans la chambre de réactif (145).

2. Dispositif (105) selon la revendication 1, l'unité de serrage (150) comportant un support (605) au niveau duquel le poinçon (155) est disposé, et l'unité de serrage (150) comportant un piston (610) qui est mobile par rapport au support (605) et sur lequel est disposée l'interface pneumatique (120), et l'unité de serrage (150) comportant un moyen à ressort (615) muni d'au moins un ressort (618), le ressort (618) étant accouplé au support (605) et au piston (610) et étant déformé en réponse au premier mouvement de translation (152).

3. Dispositif (105) selon la revendication 2, le piston (610) comportant au moins une soupape de commutation pneumatique (903) accouplée fluidiquement à l'interface pneumatique (120).

4. Dispositif (105) selon l'une des revendications précédentes, l'unité de serrage (150) comportant au moins une broche de positionnement (910) qui est conçue pour positionner la cartouche (110).

5. Dispositif (105) selon l'une des revendications précédentes, l'unité de serrage (150) comportant une autre interface (805 ; 905) destinée à venir en contact thermique, optique et/ou mécanique avec la cartouche (110) .

6. Dispositif (105) selon l'une des revendications précédentes, comprenant un moyen d'entraînement (160) qui est conçu pour amener l'unité de serrage (150) à effectuer le premier et le deuxième mouvement de translation (152, 154).

7. Dispositif (105) selon l'une des revendications précédentes, comprenant une autre unité de serrage (150) qui est disposée en regard de l'unité de serrage (150) de manière adjacente à la zone de réception (130).

8. Dispositif (105) selon la revendication 7, l'autre unité de serrage (150) comportant une autre interface pneumatique (620) destinée à venir en contact pneumatique avec un autre orifice pneumatique (240) de la cartouche (110) .

9. Dispositif (105) selon l'une des revendications 7 à 8, l'autre unité de serrage (650) étant conçue pour effectuer un autre mouvement de translation (652) en direction de la zone de réception (130).

10. Dispositif (105) selon l'une des revendications précédentes, l'unité de serrage (150) étant conçue pour effectuer le premier mouvement de translation (152) afin d'introduire partiellement le poinçon (155) dans la chambre de réactif (145), et l'unité de serrage (150) étant conçue pour effectuer le deuxième mouvement de translation (154) afin d'introduire le poinçon (155) plus profondément dans la chambre de réactif (145).

11. Analyseur de laboratoire à puce (100) comprenant un dispositif (105) selon l'une des revendications 1 à 10 et un moyen de pression (115) destiné à fournir une pression pneumatique à l'interface pneumatique (120) et un boîtier (125) pourvu d'un orifice de cartouche (135) débouchant dans la zone de réception (130) et destiné à introduire la cartouche (110).

12. Procédé (1100) d'accouplement d'une cartouche (110) destinée à un analyseur de laboratoire à puce (100) à l'aide d'un dispositif (105) selon l'une des revendications 1 à 10, la cartouche (110) comportant au moins un orifice pneumatique (140) et au moins une chambre de réactif (145), le procédé (1100) comportant au moins les étapes suivantes :
amener l'unité de serrage (150) à effectuer un premier mouvement de translation (1101) en direction de la zone de réception (130) afin d'amener l'interface pneumatique (120) en contact avec l'orifice pneumatique (140) ;
amener l'unité de serrage (150) à effectuer un deuxième mouvement de translation (1103) en direction de la zone de réception (130) afin d'introduire le poinçon (155) dans la chambre de réactif (145), le deuxième mouvement de translation (1103) faisant suite au premier mouvement de translation (1101).
